# EUROPEAN PATENT APPLICATION

(11) **EP 4 303 183 A1**
(43) Date of publication of application: **10.01.2024**
(21) Application number: 22763212.2
(22) Date of filing: 28.02.2022
(51) Int. Cl.: C01B 25/45, H01B 13/00, H01M 10/0562

(54) **METHOD FOR PRODUCING SULFIDE SOLID ELECTROLYTE**

(30) Priority: 05.03.2021 JP 2021035758
(71) Applicant: Mitsui Mining & Smelting Co., Ltd., Shinagawa-ku Tokyo 141-8584 (JP)
(72) Inventor: MIKI, Joji, Ageo-shi, Saitama 362-0021 (JP); MATSUSHITA, Takayuki, Ageo-shi, Saitama 362-0021 (JP); KANAMORI, Tomohiro, Ageo-shi, Saitama 362-0021 (JP)
(74) Representative: Novagraaf Technologies
(86) International application number: PCT/JP2022/008389
(87) International publication number: WO 2022/186156

(57) **Abstract**

A method for producing a sulfide solid electrolyte of the present invention includes: a step of mixing a lithium (Li) element source, a phosphorus (P) element source, and a sulfur (S) element source, thereby obtaining a raw material composition; a step of firing the raw material composition, thereby obtaining a sulfide; a step of milling a slurry containing a solvent having fluorine atoms and the sulfide; and a step of drying the slurry. The sulfide in the slurry preferably has a concentration of 3 to 40 mass%. The step of milling a slurry is preferably a step of dry milling the sulfide, and mixing the dry milled sulfide and the solvent, thereby preparing the slurry.

## Description

### Technical Field

The present invention relates to a method for producing a sulfide solid electrolyte. The sulfide solid electrolyte produced using the method of the present invention is useful as electrolytes for solid-state batteries, for example.

### Background Art

In recent years, solid electrolytes have been attracting attention as a substitute for the electrolyte used in many liquid batteries. Solid-state batteries using solid electrolytes are expected to be put into practical use as batteries that are safer and have a higher energy density compared with liquid batteries using flammable organic solvents.

Sulfide solid electrolytes are known as a type of solid electrolytes. Since sulfide solid electrolytes are highly reactive with water, aromatic organic solvents such as toluene or aliphatic organic solvents such as heptane, which are organic compounds that are difficult to be mixed with water, are used as dispersants when the sulfide solid electrolytes are formed into slurries, as described in Patent Literature 1. Triethylamine is also sometimes used as a dispersant.

### Citation List

### Patent Literature

Patent Literature 1: WO 2020/203224

### Summary of Invention

However, the aforementioned dispersants are relatively difficult to handle, which is problematic from both industrial and environmental perspectives.

Therefore, it is an object of the present invention to produce a sulfide solid electrolyte using a solvent that is safe and can reduce the environmental burden.

The present invention provides a method for producing a sulfide solid electrolyte, including:
a step of mixing a lithium (Li) element source, a phosphorus (P) element source, and a sulfur (S) element source, thereby obtaining a raw material composition;
a step of firing the raw material composition, thereby obtaining a sulfide;
a step of milling a slurry containing a solvent having fluorine atoms and the sulfide; and
a step of drying the slurry.

### Description of Embodiments

Hereinafter, the present invention will be described based on preferred embodiments thereof. A production method of the present invention relates to a method for producing a sulfide solid electrolyte. This production method is roughly divided into: a step of mixing a lithium (Li) element source, a phosphorus (P) element source, and a sulfur (S) element source, thereby obtaining a raw material composition; a step of firing the raw material composition, thereby obtaining a sulfide; a step of milling a slurry containing a solvent having fluorine atoms and the sulfide; and a step of drying the milled slurry. Hereinafter, each step will be described.

The Li element source may be lithium sulfide (Li₂S), for example. The P element source may be phosphorus pentasulfide (P₂S₅), for example. As for the S element source, if the Li element source and/or the P element source is a sulfide, the sulfide may be used as the S element source. These compounds are mixed to obtain a raw material composition. Depending on the type of sulfide solid electrolyte, for example, a halogen (X) element source may be included in the raw material composition. The X element source may be lithium halide, for example. Examples of X include chlorine (Cl), bromine (Br), iodine (I), and fluorine (F).

The raw material composition obtained by mixing the above-mentioned compounds is subjected to a firing step. The firing is preferably performed in an inert gas atmosphere or in an atmosphere containing hydrogen sulfide gas. The atmosphere containing hydrogen sulfide gas may be 100% hydrogen sulfide gas or a mixture of hydrogen sulfide gas and an inert gas such as argon. A sulfide is obtained through the firing.

Regardless of the firing atmosphere, the firing temperature is preferably from 350 to 550°C, for example. This temperature is preferably maintained for 0.5 to 20 hours, for example.

The thus obtained sulfide may be any type of known sulfide solid electrolytes without particular limitation, as long as they are compounds containing a sulfur (S) element. Examples thereof include a sulfide containing a lithium (Li) element, a phosphorus (P) element, and a sulfur (S) element, a sulfide containing a lithium (Li) element, a phosphorus (P) element, a germanium (Ge) element, and a sulfur (S) element, and a sulfide containing a lithium (Li) element, a phosphorus (P) element, a sulfur (S) element, and a halogen (X) element.

The sulfide that is to be milled may be a crystalline compound. Alternatively, the sulfide may be a vitreous compound. A crystalline compound is a substance in which a diffraction peak attributed to a crystalline phase is observed when measured using an X-ray diffraction method (hereinafter alternatively referred to as "XRD").

In particular, the sulfide preferably contains a Li element, a P element, a S element, and a halogen (X) element. In the production method of the present invention using a solvent having fluorine atoms, the affinity of the X element and fluorine tends to increase because they are both group 17 elements. This makes it easier for fluorine to adsorb on the surface of the solid electrolyte, thereby exerting a protective effect on the surface and reducing the frequency of contact with moisture. It is assumed that this effect contributes to suppressing the decrease in ion conductivity. The above-mentioned X is preferably at least one selected from chlorine (Cl), bromine (Br), and iodine (I), more preferably Cl or Br, and even more preferably Cl and Br, for example. This is because lithium ion conductivity can be improved.

The sulfide preferably contains a compound represented by the composition formula LiₐPS_{b}X_{c} (where X is at least one type of halogen, a represents a number of 3.0 to 6.0, b represents a number of 3.5 to 4.8, and c represents a number of 0.1 to 3.0), in order to obtain high lithium ion conductivity, for example.

In particular, the sulfide preferably has a crystalline phase with an argyrodite-type crystal structure, in order to enhance the lithium ion conductivity of the solid electrolyte.

An argyrodite-type crystal structure refers to a crystal structure possessed by a group of compounds derived from a mineral represented by the chemical formula Ag₈GeS₆. Whether or not a sulfide has a crystalline phase with an argyrodite-type crystal structure can be determined through XRD measurement or the like. For example, in a diffraction pattern measured through XRD using CuKα1 radiation, a solid electrolyte having a crystalline phase with an argyrodite-type crystal structure exhibits characteristic diffraction peaks at 2θ = 15.3°±1.0°, 17.7°±1.0°, 25.2°±1.0°, 30.0°±1.0°, 30.9°±1.0°, and 44.3°±1.0°. The solid electrolyte may further exhibit characteristic diffraction peaks at 2θ = 47.2°±1.0°, 51.7°±1.0°, 58.3°±1.0°, 60.7°±1.0°, 61.5°±1.0°, 70.4°±1.0°, and 72.6°±1.0°, in addition to the above-mentioned diffraction peaks, depending on the type of elements constituting the sulfide. For example, data of PDF No. 00-034-0688 can be used to identify diffraction peaks attributed to an argyrodite-type crystal structure.

The above-mentioned sulfide is mixed with a solvent having fluorine atoms to prepare a slurry, and this slurry is subjected to wet milling. When this sulfide is milled, a solid electrolyte, which is a target product of this production method, is obtained. Therefore, the sulfide that is to be milled has a particle size larger than that of the solid electrolyte that will be obtained as a result of this production method. In this sense, in the following description, the sulfide that is to be milled is also referred to as a "coarse powder of the solid electrolyte".

Powder milling can be roughly divided into wet milling and dry milling, and wet milling is used in the present invention. The reason for this is that it is easier to obtain a sulfide powder with a desired particle size when using wet milling than when using dry milling.

Conventionally, toluene and heptane have been used as solvents for wet milling of a coarse powder of solid electrolytes constituted by sulfides. Toluene and heptane are substances that are not likely to contain water as an impurity, and thus they are suitable solvents for wet milling of sulfides that are highly reactive with water. However, toluene and heptane have the disadvantages of being relatively difficult to handle and having a high environmental burden. The inventors of the present invention conducted an in-depth study in order to address these disadvantages, and found that it is effective to use a solvent having fluorine atoms (hereinafter referred to as a "fluorine solvent" for the sake of convenience). The fluorine solvent has the advantages of being less flammable than toluene or heptane and being safer for the human body. Moreover, when the fluorine solvent is used as a solvent for wet milling of a coarse powder of the solid electrolyte, wet milling can be performed as successfully as when toluene or heptane is used.

Both inorganic and organic compounds can be used as the fluorine solvent.

The fluorine solvent constituted by an inorganic compound may be hydrogen fluoride.

The fluorine solvent constituted by an organic compound may be a compound in which some or all of the hydrogen atoms in an organic compound used as a solvent are substituted with fluorine atoms. Examples of the organic compound include those having at least one selected from the group consisting of an alkyl group, a vinyl group, an aryl group, an ether group, an ester group, a hydroxy group, an aldehyde group, a carbonyl group, a carboxy group, an amino group, and a sulfo group.

Specific examples of the organic compound include a chain hydrocarbon, a cyclic hydrocarbon, an aromatic hydrocarbon, a vinyl compound, an ether, an ester, an alcohol, an aldehyde, a ketone, an organic acid, an amine, and a sulfonic acid.

The fluorine solvent constituted by a chain hydrocarbon may be a compound in which some or all of the hydrogen atoms in chain alkanes, chain alkenes, and chain alkynes are substituted with fluorine atoms.

The fluorine solvent constituted by a cyclic hydrocarbon may be a compound in which some or all of the hydrogen atoms in cyclic alkanes, cyclic alkenes, and cyclic alkynes are substituted with fluorine atoms.

The fluorine solvent constituted by an aromatic hydrocarbon may be a compound in which some or all of the hydrogen atoms bound to benzene rings are substituted with fluorine atoms or a compound in which some or all of the hydrogen atoms of groups bound to benzene rings are substituted with fluorine atoms.

The fluorine solvent constituted by a vinyl compound may be a compound in which some or all of the hydrogen atoms bound to vinyl groups are substituted with fluorine atoms or a compound in which some or all of the hydrogen atoms of groups bound to vinyl groups are substituted with fluorine atoms.

The fluorine solvent constituted by an ether may be a compound in which some or all of the hydrogen atoms included in groups bound to ether groups are substituted with fluorine atoms.

The fluorine solvent constituted by an ester may be a compound in which some or all of the hydrogen atoms included in groups bound to ester groups are substituted with fluorine atoms.

The fluorine solvent constituted by an alcohol may be a compound in which some or all of the hydrogen atoms included in groups bound to hydroxyl groups are substituted with fluorine atoms.

The fluorine solvent constituted by an aldehyde may be a compound in which some or all of the hydrogen atoms included in groups bound to aldehyde groups are substituted with fluorine atoms.

The fluorine solvent constituted by a ketone may be a compound in which some or all of the hydrogen atoms included in groups bound to carbonyl groups are substituted with fluorine atoms.

The fluorine solvent constituted by an organic acid may be a compound in which some or all of the hydrogen atoms included in organic acid residues are substituted with fluorine atoms.

The fluorine solvent constituted by an amine may be a compound in which some or all of the hydrogen atoms included in groups bound to amino groups are substituted with fluorine atoms.

The fluorine solvent constituted by a sulfonic acid may be a compound in which some or all of the hydrogen atoms included in groups bound to sulfo groups are substituted with fluorine atoms.

Among these various types of fluorine solvents, it is preferable to use fluorides of chain hydrocarbons, aromatic hydrocarbons, vinyl compounds, ethers, esters, alcohols, aldehydes, ketones, organic acids, amines, and sulfonic acids, more preferable to use fluorides of chain hydrocarbons and ethers, and even more preferable to use fluorides of ethers, in order to successfully perform wet milling of a coarse powder of the solid electrolyte, further reduce the inflammability, further improve the safety for the body, and further reduce the environmental burden.

Examples of fluorides of ethers include alkyl fluoroalkyl ethers and difluoroalkyl ethers, among which it is preferable to use alkyl fluoroalkyl ethers in order to further reduce the inflammability, further improve the safety for the body, and further reduce the environmental burden. In particular, it is preferable to use, alkyl perfluoroalkyl ethers in order to further reduce the inflammability, further improve the safety for the body, and further reduce the environmental burden.

Examples of alkyl perfluoroalkyl ethers include methyl perfluorobutyl ethers and ethyl perfluorobutyl ethers.

Among these various types of fluorine solvents, it is particularly preferable to use those that are less likely to contain water, and especially preferable to use those with a water content that is lower than the toluene content. Sulfides may generate hydrogen sulfide when they come into contact with water, and the use of the fluorine solvent that is less likely to contain water can reduce the risk of hydrogen sulfide generation. From this point of view, the fluorine solvent has a water content of preferably 150 ppm or less, more preferably 120 ppm or less, and even more preferably 100 ppm or less.

The water content in a fluorine solvent can be measured by adapting the principle of the Karl Fischer reaction to the coulometric titration method. Specifically, an electrolytic solution containing iodide ions, sulfur dioxide, and alcohol as the main components is placed in an electrolytic cell, and iodine necessary for titration is generated internally through electrolysis for measurement. The Karl Fischer reaction occurs in the electrolytic solution, where water reacts with iodine and sulfur dioxide in the presence of base and alcohol.

Meanwhile, iodine is generated from iodide ions at the positive electrode through electrolysis in an electrolytic solution containing iodide ions. When the generated iodine is consumed in the Karl Fischer reaction, the detection electrode detects that iodine has been consumed, and electrolysis again generates iodine from the positive electrode. The amount of water content is converted from the amount of electricity required for the electrolysis described above.

From the viewpoint of further reducing the contact between the coarse powder of the solid electrolyte and water during wet milling, it is preferable to perform wet milling in an environment with a temperature which is -20°C or lower than a dew point. As described below, if wet milling is performed multiple times, it is preferable to perform all wet milling in the environment described above. Furthermore, as described below, if dry milling is performed prior to wet milling, it is preferable to perform both dry and wet milling in the environment described above. That is to say, it is preferable to perform all milling in the environment described above, regardless of whether it is dry or wet milling.

These various types of fluorine solvents may be used alone or in a combination of two or more.

The solvent for wet milling may be a fluorine solvent alone or a mixed solvent of a fluorine solvent and a solvent other than the fluorine solvent. The proportion of the fluorine solvent in the mixed solvent is preferably 50 mass% or more, more preferably 70 mass% or more, and even more preferably 90 mass% or more, from the viewpoint of safety and environmental burden.

The coarse powder of the solid electrolyte dispersed in the fluorine solvent may have a particle size (i.e., a particle size before wet milling) of 0.3 µm or more, 1 µm or more, or 3 µm or more, for example. The particle size refers to a volume-based cumulative particle size D₅₀ at a cumulative volume of 50 vol% as measured using the laser diffraction scattering particle size distribution method.

In a slurry containing the fluorine solvent and coarse powder of the solid electrolyte, the percentage of the coarse powder of the solid electrolyte in the slurry is preferably set to 3 to 40 mass% in order to obtain a sulfide solid electrolyte with a desired particle size. From the viewpoint of making this advantage more remarkable, the percentage of the coarse powder of the solid electrolyte in the slurry is more preferably set to 3 to 25 mass%, and even more preferably set to 7 to 20%.

Various types of media mills can be used for wet milling of the slurry. Ball mills, bead mills, paint shakers, homogenizers, and the like can be used as the media mills.

Balls and beads made of various ceramics such as alumina and zirconia are used as dispersing media for the media mills. The dispersing media may have a diameter of 0.1 to 50 mm, for example.

In wet milling using a media mill, the ratio of the dispersing media to the slurry is preferably such that the volume ratio of the media to the slurry present in the milling chamber (volume of the slurry / apparent volume of the media) (the apparent volume of the media is the volume calculated from the media packing density) is from 0.2 to 3, in order to obtain a solid electrolyte with a desired particle size. From the viewpoint of making this advantage more remarkable, the volume ratio of the media to the slurry is more preferably from 0.3 to 2, and even more preferably from 0.4 to 1.8. This value varies depending on the milling machine used and slurry concentration and can be set arbitrarily as long as the conditions are such that milling is allowed to progress, and is not particularly limited.

The dispersion time by the media mill may be 10 minutes or longer, 15 minutes or longer, of 1 hour or longer, for example. Meanwhile, the dispersion time may be 60 hours or shorter, 30 hours or shorter, or 10 hours or shorter, for example.

The wet milling may be performed only once or two or more times. If wet milling is performed two or more times, it is preferable that the size (diameter) of the milling media used is successively reduced in accordance with the progress of the wet milling stages, in order to achieve efficient milling.

The wet milling is preferably performed until the particle size of the coarse powder of the solid electrolyte reaches a size suitable for use in solid-state batteries. The particle size of the solid electrolyte after wet milling is preferably from 0.1 to 20.0 µm, more preferably from 0.3 to 15.0 µm, and even more preferably from 0.5 to 10.0 µm, in terms of the volume-based cumulative particle size D₅₀ at a cumulative volume of 50 vol% as measured using the laser diffraction scattering particle size distribution method.

In the present invention, dry milling can be performed prior to the wet milling of the coarse powder of the solid electrolyte. That is to say, the coarse powder of the solid electrolyte may be dry milled, the dry milled coarse powder may be mixed with a solvent to prepare a slurry, and the slurry may be wet milled. Dry milling followed by wet milling makes it possible to improve the milling efficiency and easily obtain a sulfide powder with a desired particle size.

For example, jet mills, ball mills, rod mills, vibrating ball mills, planetary mills, and disk mills can be used for the dry milling.

Once the coarse powder of the solid electrolyte has been milled to have a desired particle size through wet milling using the above-described procedure, the slurry is separated through solid-liquid separation to obtain a wet solid content. This solid content is then subjected to a drying process to remove the solvent.

For example, hot air drying or drying under reduced pressure can be employed for the drying. For the purpose of shortening the drying time, it is preferable to perform drying under reduced pressure after solid-liquid separation through filtration under reduced pressure.

The pressure during drying under reduced pressure is preferably 10000 Pa or lower, and more preferably 5000 Pa or lower, in absolute pressure. There is no particular limitation on the lower limit of pressure.

The temperature is preferably from 50 to 200°C, and more preferably from 70 to 160°C.

The thus obtained sulfide solid electrolyte powder is sieved as necessary to have a desired particle size. The sulfide solid electrolyte powder can be used as a material for forming a solid electrolyte layer, a positive electrode layer, or a negative electrode layer. Specifically, the sulfide solid electrolyte powder can be used in batteries that have a positive electrode layer, a negative electrode layer, and a solid electrolyte layer between the positive electrode and negative electrode layers. That is to say, the sulfide solid electrolyte powder can be used in so-called solid-state batteries. More specifically, they can be used in lithium solid-state batteries. The lithium solid-state batteries may be primary batteries or secondary batteries. There is no particular limitation on the shape of the batteries, and the batteries may have a laminated, cylindrical, or rectangular shape, for example. The term "solid-state battery" may refer to solid-state batteries that do not contain any liquid or gel substances as the electrolyte, as well as those that contain 50 mass% or less, 30 mass% or less, or 10 mass% or less of liquid or gel substances as the electrolyte, for example.

### Examples

Hereinafter, the present invention will be described in greater detail using examples. However, the scope of the present invention is not limited to the examples below. Unless otherwise specified, "%" and "parts" respectively mean "mass%" and "parts by mass".

### Example 1

### (1) Preparation of Solid Electrolyte

A Li₂S powder, a P₂S₅ powder, a LiCl powder, and a LiBr powder were weighed so as to obtain the composition Li_{5.4}PS_{4.4}Cl_{0.8}Br_{0.8}. These powders were milled and mixed using a ball mill to obtain a mixed powder. The mixed powder was fired to obtain a fired product constituted by lithium ion-conductive sulfide. The firing was performed using a tube electric furnace. During the firing, 100% pure hydrogen sulfide gas was circulated at 1.0 L/min in the electric furnace. The firing temperature was set to 450°C, and firing was performed for 4 hours. As a result of XRD measurement, it was seen that this fired product has a crystalline phase with an argyrodite-type crystal structure.

### (2) Wet Milling of Solid Electrolyte

The fired product was coarsely crushed with a mortar and pestle, passed through a 250 µm sieve, and mixed with the solvent shown in Table 1 below to prepare a slurry with the concentration shown in the same table.

The slurry was subjected to a paint shaker apparatus (using zirconia with a diameter of 2 mm) and wet milled. The beads and the slurry were placed in the milling vessel so that the above-described ratio of the apparent volume of the media to the volume of the slurry was 1.5, and the wet milling was carried out for 20 minutes. After the wet milling, the slurry was separated through solid-liquid separation, and the solid content was dried. The drying was performed at 150°C for 20 minutes under vacuum at -0.09 MPa or lower relative to the atmospheric pressure. After the drying, the fired product was sieved through a sieve with a 53 µm opening to obtain the desired sulfide solid electrolyte. All of the above-described processes were performed in an environment with a temperature which was -20°C or lower than a dew point.

### Examples 2 to 6 and Comparative Example 1

In Examples 2 to 6, the fluorine solvents shown in Table 1 below were used. In Comparative Example 1, toluene was used as the solvent. The concentrations of the slurries were as shown in the same table. The sulfide solid electrolytes were obtained in the same way as that of Example 1, except for these aspects.

**Table 1**

| | **Solvent** | | **Slurry concentration (mass%)** |
|---|---|---|---|
| | **Type** | **Water content (ppm)** | |
| **Ex. 1** | C₄F₉OCH₃ | 95 | 12.5 |
| **Ex. 2** | C₄F₉OC₂H₅ | 92 | 13.2 |
| **Ex. 3** | Asahiklin AC-6000 | 50 | 12.2 |
| **Ex. 4** | Dipsol SC-9000 | - | 14.2 |
| **Ex. 5** | Dipsol SC-9100A | - | 13.5 |
| **Ex. 6** | Zeorora HTA | - | 12.6 |
| **Com. Ex. 1** | Toluene | 110 | 20.0 |

In the examples shown in Table 1, it was confirmed that even when a fluorine solvent was used as a solvent for wet milling, the wet milling was equivalent to those using toluene, which is a conventionally used solvent. Although not shown in the table, the inventors of the present invention confirmed that the lithium ion conductivity of the sulfide solid electrolyte obtained in each example was equivalent to that of the sulfide solid electrolyte obtained in the comparative example.

### Industrial Applicability

The present invention provides a method for producing a sulfide solid electrolyte that is safe and can reduce the environmental burden.

## Claims

1. A method for producing a sulfide solid electrolyte, the method comprising:
- a step of mixing a lithium (Li) element source, a phosphorus (P) element source, and a sulfur (S) element source, thereby obtaining a raw material composition;
- a step of firing the raw material composition, thereby obtaining a sulfide;
- a step of milling a slurry containing a solvent having fluorine atoms and the sulfide; and
- a step of drying the slurry.

2. The method according to claim 1, wherein the sulfide in the slurry has a concentration of 3 to 40 mass%.

3. The method according to claim 1 or 2, wherein the solvent is an organic compound.

4. The method according to claim 3, wherein the organic compound has at least one selected from the group consisting of an alkyl group, a vinyl group, an aryl group, an ether group, an ester group, a hydroxy group, an aldehyde group, a carbonyl group, a carboxy group, an amino group, and a sulfo group.

5. The method according to any one of claims 1 to 4, wherein the step of milling is performed in an environment with a temperature which is -20°C or lower than a dew point.

6. The production method according to any one of claims 1 to 5, wherein the step of milling is a step of dry milling the sulfide, and mixing the dry milled sulfide and the solvent, thereby preparing the slurry.

7. The method according to any one of claims 1 to 6, wherein the sulfide has a crystalline phase with an argyrodite-type crystal structure.
